# EUROPEAN PATENT APPLICATION

(11) **EP 1 777 926 A1**
(43) Date of publication of application: **25.04.2007**
(21) Application number: 06021263.6
(22) Date of filing: 10.10.2006
(51) Int. Cl.: H04M 1/725, G06F 9/00

(54) **Method and mobile terminal for performing multiple tasks without conflict**

(30) Priority: 21.10.2005 KR 20050099882
(71) Applicant: LG Electronics Inc., Yongdungpo-Gu Seoul 150-010 (KR)
(72) Inventor: Yoo, Jun-Hyun, Dongan-Gu, Anyang Gyeonggi-Do (KR)
(74) Representative: Katérle, Axel

(57) **Abstract**

A mobile terminal capable of multitasking, which includes a determination unit that determines whether a module requested to be loaded into a new task is the same as a module already loaded in a first task, and an anti-conflict unit that prevents the same module from being twice loaded.

## Description

### BACKGROUND OF THE INVENTION

### 1. Field of the Invention

The present invention relates to a mobile terminal, and more particularly to a mobile terminal that performs multiple tasks and prevents a conflict from occurring when a user attempts to load a module when the same module is already loaded in a task.

### 2. Description of the Background Art

Many conventional mobile terminals are incapable of performing multiple tasks at the same time. For example, with such a mobile terminal, a user is not able to download a file over the Internet while simultaneously making a call, or make a call while simultaneously playing a game. Such a mobile terminal is only capable of running a single application at a time.

Some mobile terminals have been developed which are capable of performing multiple tasks simultaneously (i.e., multitasking). However, these mobile terminals have significant shortcomings.

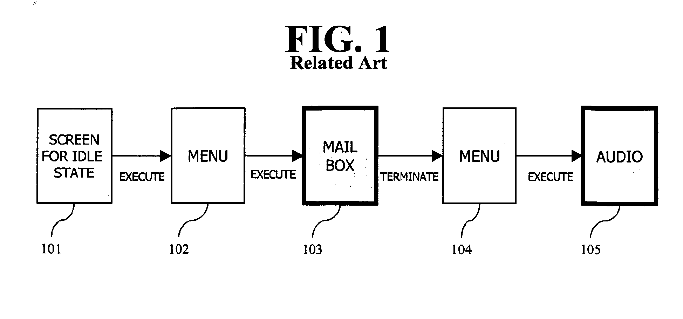

FIGURE 1 is a flow chart showing a process of executing a task by a conventional mobile terminal that does not support multitasking.

As shown in FIG. 1, in the conventional mobile terminal, a current task has to be terminated before another task can be executed. As shown in FIG. 1, the conventional mobile terminal first begins in an idle state (101). When a "MENU" task is executed (102), a menu is displayed on a display of the conventional mobile terminal. A user can then select a "MAIL BOX" task to be executed (103). If the user wishes to then execute an audio player task, the user must return to the menu (such as by selecting a "BACK" or "MENU" option), at which time the "MAIL BOX" task is terminated, and the "MENU" task is re-executed (104). The user may then execute the audio player task ("AUDIO") from the menu (105).

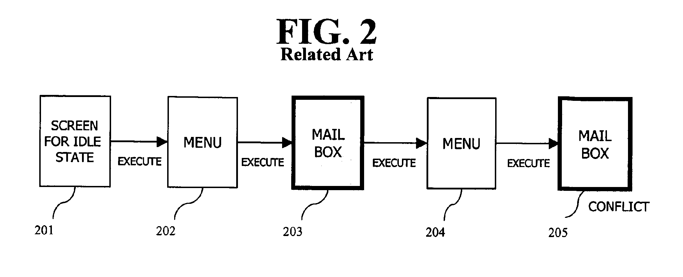

FIGURE 2 is a flow chart showing a process of executing a task by a conventional mobile terminal that does support multitasking.

As shown in FIG. 2, when a conventional mobile terminal that supports multitasking attempts to load the same module more than once, a conflict occurs. As shown in FIG. 2, the conventional mobile terminal begins in an idle state (201). After a user executes a "MENU" task (202), the user then executes a "MAIL BOX" task (203). With the conventional mobile terminal which supports multitasking, a user may then execute the "MENU" task (204) without first terminating the "MAIL BOX" task, in contrast to the conventional mobile terminal which does not support multitasking. If the user then attempts to execute the "MAIL BOX" task (205), a conflict occurs because the "MAIL BOX" task has already been loaded.

### BRIEF DESCRIPTION OF THE INVENTION

Therefore, an object of the present invention is to provide a mobile terminal which supports multitasking but prevents a conflict from occurring when a user attempts to load a module when the same module is already loaded in a task.

To achieve these and other advantages and in accordance with the purpose of the present invention, as embodied and broadly described herein, there is provided a mobile terminal capable of multitasking, which includes a determination unit that determines whether a module requested to be loaded into a new task is the same module already loaded in a first task, and an anti-conflict unit that prevents a module from being twice loaded.

The mobile terminal may include a task manager that executes and manages at least one task, a memory that stores the task manager, the determination unit, and the anti-conflict unit, and a processor that executes the task manager, the determination unit and the anti-conflict unit.

The requested module may be an I/O module. The I/O module may be a module that performs an I/O operation in a memory. The requested module may be a message service module, a camera module, or an address book module.

The anti-conflict unit may disconnect the module loaded in the first task and connect the disconnected module to the new task. The anti-conflict unit may disconnect the module from the new task and then re-connect the module to the first task, according to a user's instruction to resume the first task.

The anti-conflict unit may deactivate the module loaded in the first task and then load the requested module into the new task. The anti-conflict unit may terminate the module loaded in the new task, and then reactivate the module loaded in the first task, according to a user's instruction to resume the first task.

The anti-conflict unit may terminate the module loaded in the first task and load the requested module into the new task. The anti-conflict unit may terminate the module loaded in the new task and then re-load the module previously loaded in the first task back into the first task, according to a user's instruction to resume the first task.

The anti-conflict unit may direct the new task to the module loaded in the first task. The direction to the module loaded in the first task may be withdrawn, according to a user's instruction to resume the first task. One of the determination unit and the anti-conflict unit may generate an alert signal indicating that the module requested to be loaded into the new task is the same as the module already loaded in the first task.

There is also provided a method of multitasking with a mobile terminal, which includes determining whether a module requested to be loaded into a new task is the same as a module already loaded in a first task, and preventing the module from being twice loaded.

The requested module may be an I/O module. The requested module may be a module that performs an I/O operation in a memory. The requested module may be a message service module, a camera module, or an address book module.

Preventing a module from being twice loaded may include disconnecting the module loaded in the first task and then connecting the disconnected module to the new task. The method may also include disconnecting the module from the new task and then reconnecting the module to the first task, according to a user's instruction to resume the first task.

Preventing a module from being twice loaded may include deactivating the module loaded in the first task, and then loading the requested module into the new task. The method may also include terminating the module loaded in the new task, and then reactivating the module loaded in the first task, according to a user's instruction to resume the first task.

Preventing a module from being twice loaded may include terminating the module loaded in the first task, and then loading the requested module into the new task. The method may also include terminating the module loaded in the new task, and then reloading the module previously loaded in the first task back into the first task, according to a user's instruction to resume the first task.

Preventing a module from being twice loaded may include directing the new task to the module loaded in the first task. The method may also include withdrawing the direction to the module loaded in the first task, according to a user's instruction to resume the first task. The method may also include generating an alert signal indicating that the module requested to be loaded into the new task is the same as the module already loaded in the first task.

There is also provided a computer-readable medium which stores a program for multitasking with a mobile terminal. The program includes conflict determination code for determining whether a module requested to be loaded into a new task is the same as a module already loaded in a first task, and conflict prevention code for preventing a module from being twice loaded.

### BRIEF DESCRIPTION OF THE DRAWINGS

The present invention is further described in the detailed description that follows, by reference to the noted drawings by way of non-limiting examples of embodiments of the present invention, in which like reference numerals represent similar parts throughout several views of the drawings, and in which:
Figure 1 is a flow chart showing a process of executing a task by a conventional mobile terminal that does not support multitasking;
Figure 2 is a flow chart showing a process of executing a task by a conventional mobile terminal that supports multitasking.
Figure 3 is a schematic block diagram illustrating an example of a configuration of a mobile terminal according to an embodiment of the present invention;
Figure 4 is a flow chart schematically illustrating a process of preventing a conflict when a mobile terminal attempts to load a module when the same module is already loaded;
Figure 5 illustrates a process of restoring a task after the process of Figure 4 is performed;
Figure 6 is a flow chart schematically illustrating another process of preventing a conflict when a mobile terminal attempts to load a module when the same module is already loaded;
Figure 7 illustrates a process of restoring a task after the process of Figure 6 is performed;
Figure 8 illustrates a sequence of on-screen images which are displayed on a mobile terminal when operated by a user;
Figure 9 is a flow chart showing a process of preventing a conflict when a mobile terminal attempts to load a module when the same module is already loaded; and
Figure 10 is a flow chart showing a process of restoring a task after the process shown in Figure 9 is performed.

### DETAILED DESCRIPTION OF THE INVENTION

Description will now be given in detail of the present invention, examples of which are illustrated in the accompanying drawings.

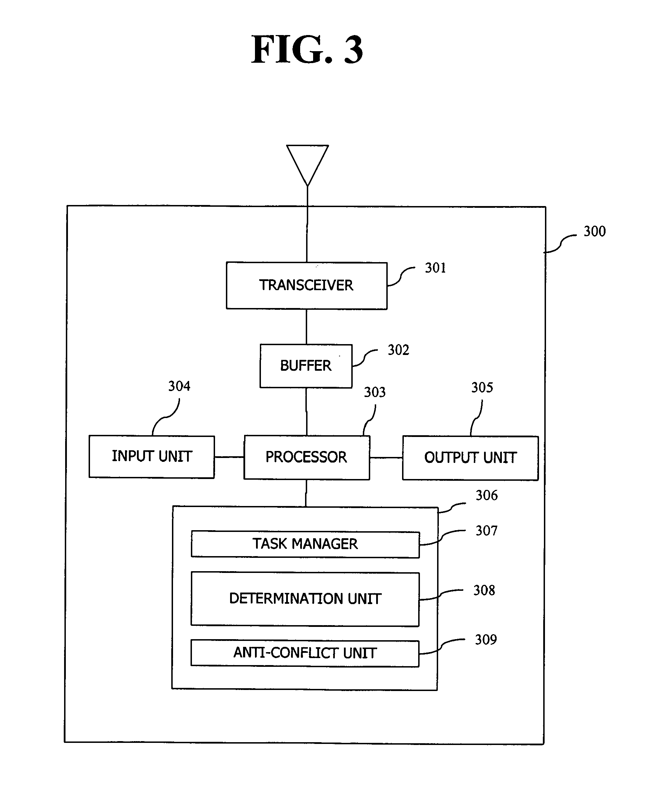

FIGURE 3 illustrates an exemplary mobile terminal 300. The mobile terminal is a portable device capable of performing multiple tasks, such as, but not limited to, a mobile phone or PDA. As shown in FIG. 3, the mobile terminal 300 includes a transceiver 301, a buffer 302, a processor 303, an input unit 304, an output unit 305, a task manager 307, a determination unit 308 which determines whether an attempt is made to load a module when the same module is already loaded, and an anti-conflict unit 309.

The task manager 307 enables one or more tasks to be executed, and manages executed tasks. The task manager 307 may display tasks which are being executed on a display of the mobile terminal 300, such as in the form of icons. A user may thus select a task by selecting its corresponding icon. In selecting the task, a user may choose to open or to terminate the selected task, for example.

The task manager may be implemented as a software program which is stored in a recording medium 306 and executed by the processor 303. Alternatively, the task manager may be implemented by hardware such as an application specific integrated circuit (ASIC). However, the task manager is not limited to these specific implementations.

The determination unit 308 detects when an attempt is made to load a module into a task when the same module is already loaded in another task. Generally speaking, a module comprises logically similar but, different functions. A module may be an input/output (I/O) module which performs an I/O operation with a memory, such as, but not limited to, a message service module, a camera module, or an address book module. A task is a group of modules which perform functions which are similar in logic. Accordingly, when a function is activated which is not similar in logic to other currently running functions, a new task is generated.

The determination unit 308 may be implemented as a software program which is stored in a recording medium 306 and executed by the processor 303. Alternatively, the determination unit 308 may be implemented by hardware such as an application specific integrated circuit (ASIC). However, the determination unit 308 is not limited to these specific implementations.

The anti-conflict unit 309 prevents a conflict from occurring when the mobile terminal 300 attempts to load a module into a task when the same module is already loaded in another task. Either the determination unit 308 or the anti-conflict unit 309 may alert the user when the mobile terminal attempts to load a module when the same module is already loaded. For example, the determination unit 308 or the anti-conflict unit 309 may alert the user by displaying a message on a display of the mobile terminal 300, by flashing an LED, by vibrating, by outputting sound, or some combination of the above. The user can then respond to the alert.

The anti-conflict unit 309 may be implemented as a software program which is stored in a recording medium 306 and executed by the processor 303. Alternatively, the anti-conflict unit 309 may be implemented by hardware such as an application specific integrated circuit (ASIC). However, the anti-conflict unit 309 is not limited to these specific implementations.

The anti-conflict unit 309 may prevent a conflict from occurring when the mobile terminal 300 attempts to load a module when the same module is already loaded in several different ways. The mobile terminal may disconnect a module from a first task, and then connect the module to a new task. Alternatively, the mobile terminal may deactivate the module in the first task and then load the module into the new task. As another alternative, the mobile terminal may terminate the module in the first task and then newly load the module into the new task. As another alternative, the mobile terminal may direct a new task to a module loaded in the first task.

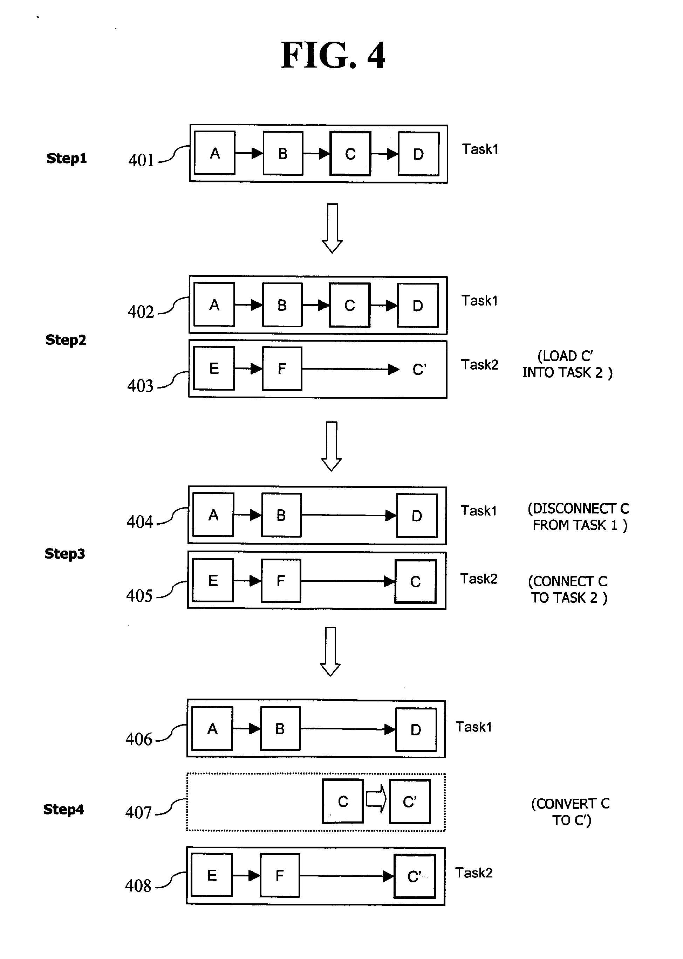

FIGURE 4 illustrates a process of preventing a conflict when a mobile terminal attempts to load a module when the same module is already loaded.

In the process shown in FIG. 4, the mobile terminal disconnects a module from a first task, and then connects the module to a new task, when the mobile terminal 300 attempts to load the module into the new task.

In step 1, modules A, B, C and D are sequentially loaded into a task 1 (401). Next, in step 2, while task 1 (402) is being executed, a user opens a new task 2 (403). When new task 2 is opened by the user, modules E and F are sequentially loaded into task 2, and then the mobile terminal attempts to load module C', which is the same as module C. In other worlds, module C and module C' are identical . It is known in the related art that a module comprises logically similar but, different functions, so that the module could perform different functions according to a user's request (e.g., if the module relates to a message service, the module may perform an outbox function , or an inbox function, for example). As modules C and C' are the same, a conflict occurs if the module is twice loaded into running tasks. Thus, in step 3, the mobile terminal disconnects the C module from task 1 (404), and connects it to task 2 (405). In step 4, the mobile terminal then converts a function of the C module to a requested function i.e. C' (407), such that task 2 (408) is capable of performing the function.

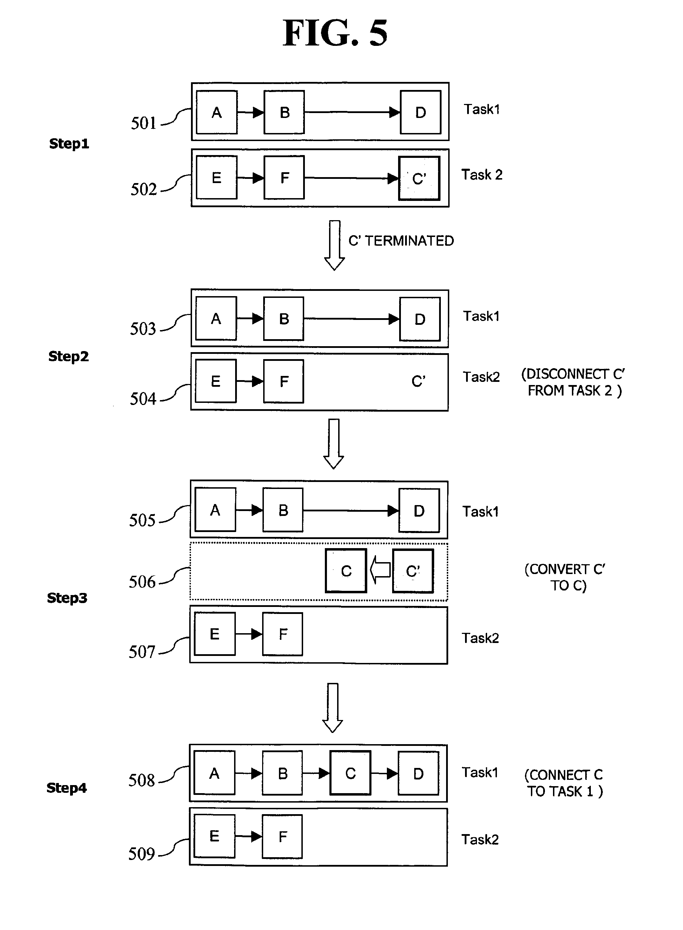

Figure 5 illustrates a process of restoring a task after the process of FIG. 4 is performed.

In step 1 of FIG. 5, task 1 (501) and task 2 (502) are in the state which results from step 4 of FIG. 4 being performed. When the user of the mobile terminal request to terminate the C' module, it is disconnected from task 2 (504) in step 2. In step 3, the function of the C' module is converted back to previous function, i.e. C module (506). Then, in step 4, the C module is reconnected to task 1 (508), such that task 1 is restored to the form it was initially in at step 1 of FIG. 4.

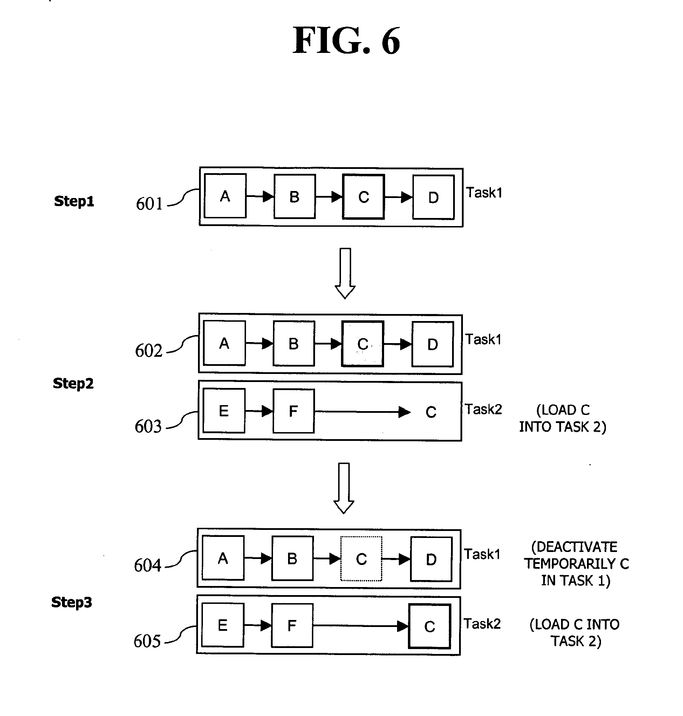

FIGURE 6 illustrates another process of preventing a conflict when a mobile terminal attempts to load a module when the same module is already loaded, which may be performed as an alternative to the process illustrated in FIGURE 4.

In the process of FIG. 6, the mobile terminal 300 deactivates a module from a first task, and then newly loads the module into a new task, when the mobile terminal 300 attempts to load the module into the new task.

In step 1, modules A, B, C and D are sequentially loaded into a task 1 (601). Next, in step 2, while task 1 (602) is being executed, a user runs a new task 2 (603). When new task 2 is opened by the user, modules E and F are sequentially loaded into task 2, and then the mobile terminal attempts to load module C. Thus, a conflict occurs since the C module is loaded into the task 1. Thus, in step 3, the C module of task 1 is deactivated (604), and then the C module is loaded into task 2 (605) without a conflict occurring.

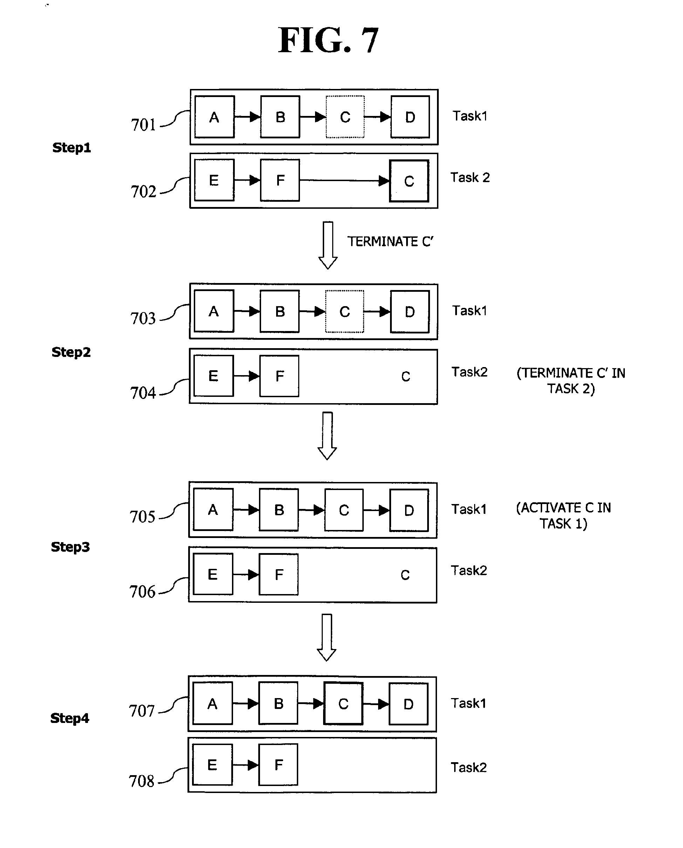

FIGURE 7 illustrates a process of restoring a task after the process of FIGURE 6 is performed.

In step 1 of FIG. 7, task 1 (701) and task 2 (702) are in the state which results from step 3 of FIG. 6 being performed. When the user of the mobile terminal terminates the C module in step 2, the C module of task 1 (705) is reactivated in step 3. Thus, task 1 is restored to the form it was initially in at step 1 of FIG. 6.

As an alternative to the processes illustrated in FIGS. 4 and 6, the mobile terminal may prevent a conflict from occurring when a user attempts to load a module when the same module is already loaded in another task, by simply terminating the module in the first task. The mobile terminal can newly load the module into a new task without a conflict occurring. When the user subsequently terminates the module in the new task, the first task can be recovered by reloading the module in the old task which was previously terminated.

In yet another embodiment, when a mobile terminal attempts to load a module when it is already loaded in a first task, a conflict can be prevented by directing a new task to the module in the first task. In this regard, when a module is loaded into the first task, it is loaded into a section of memory. If a user wants to run the same module in a new task, instead of loading the module into the new task, the new task refers to the address of memory in which the module is loaded. When the new task is terminated, the direction to the first task is withdrawn, and no change must be made to the first task.

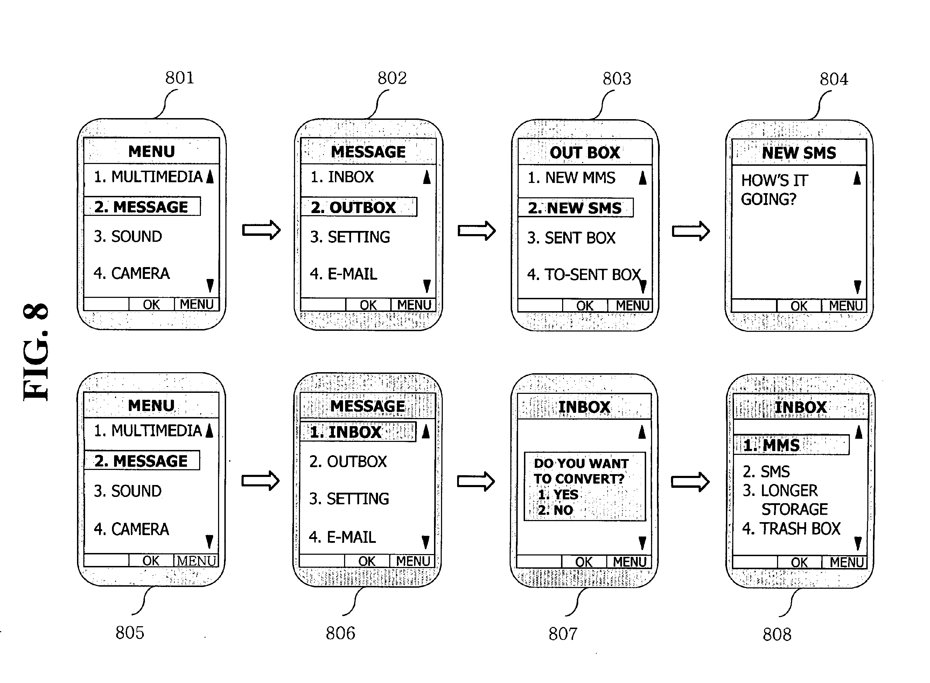

FIGURE 8 illustrates a sequence of on-screen images which are displayed on a mobile terminal when operated by a user.

When a user selects a "MESSAGE" option from a menu (801), as shown in FIG. 8, the mobile terminal loads a message service module. In the example shown in FIG. 8, the user then selects an "OUTBOX" option (802), then selects a "NEW SMS" option (803), and then prepares a new SMS message (804).

If the user then starts a new menu task, and selects a "MESSAGE" option from the menu (805), and then selects an "INBOX" option (806), the mobile terminal will alert the user (807) to prevent the same module (message modules, in this example) from being twice loaded. In this regard, the mobile terminal may query the user as to whether he wishes to convert the previously loaded message module performing the "OUTBOX" function into a message module performing an "INBOX" function. If the user agrees to convert, the on-screen image 808 is displayed.

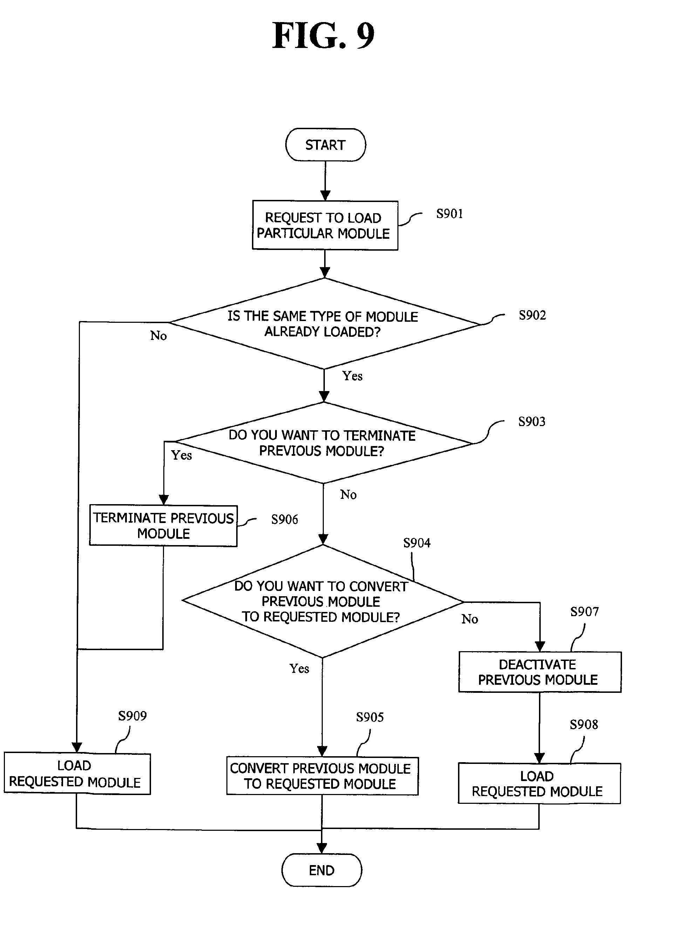

FIGURE 9 is a flow chart showing a process of preventing a conflict when a mobile terminal attempts to load a module when the same module is already loaded.

As shown in FIG. 9, first a user requests that a particular module be loaded (S901). Then, the mobile terminal determines whether the same module is already loaded (S902). If the answer is "NO", the mobile terminal loads the requested module (S909), and the process terminates. However, if the answer is "YES", then the mobile terminal queries the user as to whether he wishes to terminate the module which is already loaded (S903).

If the user answers "YES", the mobile terminal terminates the module which is already loaded (S906) and loads the requested module (S909). If the user answers "NO", the mobile terminal queries the user as to whether he wishes to convert the module which is already loaded into the requested module (S904). If the user answers "YES", the mobile terminal converts the previously loaded module into the request module (S905), and the process terminates. If the user answers "NO", the mobile terminal deactivates the previously loaded module (S907) and loads the requested module (S908).

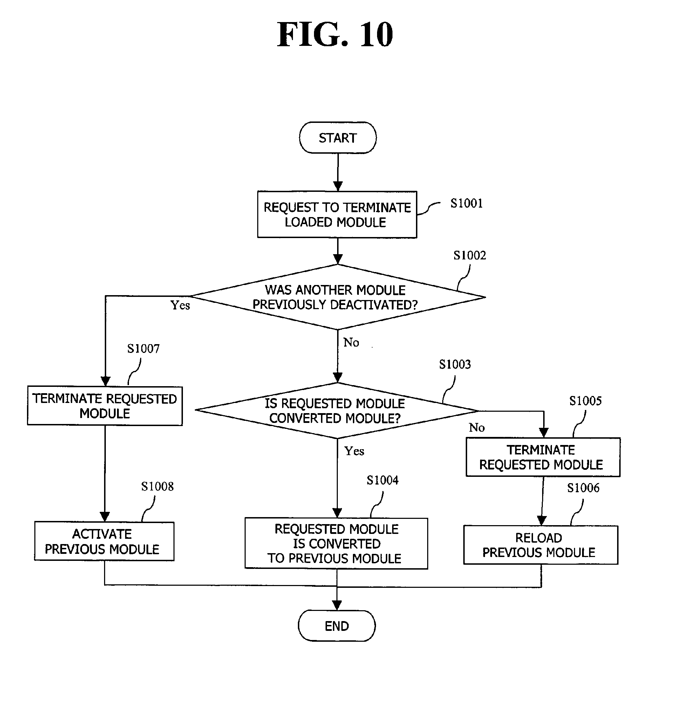

Figure 10 is a flow chart showing a process of restoring a task after the process shown in FIG. 9 is performed.

As shown in FIG. 10, when a user requests to terminate a particular module (S1001), the mobile terminal determines if another module was previously deactivated to load the module (S1002). If the answer is "YES", the mobile terminal terminates the particular module (S1007), and activates the previously deactivated module (S1008). If the answer is "NO", the mobile terminal determines whether the particular module is a converted module (S1003). If the answer is "YES", the mobile terminal converts the particular module back to its former state (S1004). Otherwise, if the answer is "NO", the mobile terminal simply terminates the requested module (S1005) and reloads the previous module (S1006).

The processes described above allow a mobile terminal to multitask, yet avoid a conflict when the mobile terminal attempts to load a module when the same module is already loaded.

Dedicated hardware implementations, such as application specific integrated circuits, programmable logic arrays and other hardware devices, can be constructed to implement one or more of the methods described above. The methods described above may also be implemented by software programs executable by processors, and stored in a recording media, such as an internal memory, a flash memory, and hard disk, or the like.

The present disclosure contemplates a computer-readable medium that includes instructions or receives and executes instructions responsive to a propagated signal. The term "computer-readable medium" includes a single medium or multiple media. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is equivalent to a tangible storage medium. Accordingly, the disclosure is considered to include any one or more of a computer-readable medium or a distribution medium and other equivalents and successor media, in which data or instructions may be stored.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The above disclosed subject matter is to be considered illustrative, and not restrictive, and the appended claims are intended to cover all such modifications, enhancements, and other embodiments which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

Although the invention has been described with reference to several exemplary embodiments, it is understood that the words that have been used are words of description and illustration, rather than words of limitation. As the present invention may be embodied in several forms without departing from the spirit or essential characteristics thereof, it should also be understood that the above-described embodiments are not limited by any of the details of the foregoing description, unless otherwise specified. Rather, the above-described embodiments should be construed broadly within the spirit and scope of the present invention as defined in the appended claims. Therefore, changes may be made within the metes and bounds of the appended claims, as presently stated and as amended, without departing from the scope and spirit of the invention in its aspects.

## Claims

1. A mobile terminal capable of multitasking, comprising:
a determination unit that determines whether a module requested to be loaded into a new task is the same as a module already loaded in a first task; and
an anti-conflict unit that prevents the module from being twice loaded.

2. The mobile terminal according to claim 1, further comprising a task manager that executes and manages at least one task.

3. The mobile terminal according to claim 2, further comprising:
a memory that stores the task manager, the determination unit, and the anti-conflict unit; and
a processor that executes the task manager, the determination unit and the anti-conflict unit.

4. The mobile terminal to claim 1, wherein the requested module is an I/O module.

5. The mobile terminal according to claim 4, wherein the I/O module is a module that performs an I/O operation in a memory.

6. The mobile terminal according to claim 1, wherein the requested module is a message service module.

7. The mobile terminal according to claim 1, wherein the requested module is a camera module.

8. The mobile terminal according to claim 1, wherein the requested module is an address book module.

9. The mobile terminal according to claim 1, wherein the anti-conflict unit disconnects the module loaded in the first task and connects the disconnected module to the new task.

10. The mobile terminal according to claim 9, wherein the anti-conflict unit disconnects the module from the new task and then re-connects the module to the first task, according to a user's instruction to resume the first task.

11. The mobile terminal according to claim 1, wherein the anti-conflict unit deactivates the module loaded in the first task and then loads the requested module into the new task.

12. The mobile terminal according to claim 11, wherein the anti-conflict unit terminates the module loaded in the new task, and then reactivates the module loaded in the first task, according to a user's instruction to resume the first task.

13. The mobile terminal according to claim 1, wherein the anti-conflict unit terminates the module loaded in the first task and loads the requested module into the new task.

14. The mobile terminal according to claim 13, wherein the anti-conflict unit terminates the module loaded in the new task and then re-loads the module previously loaded in the first task back into the first task, according to a user's instruction to resume the first task.

15. The mobile terminal according to claim 1, wherein the anti-conflict unit directs the new task to the module loaded in the first task.

16. The mobile terminal according to claim 15, wherein the direction to the module loaded in the first task is withdrawn, according to a user's instruction to resume the first task.

17. The mobile terminal according to claim 1, wherein one of the determination unit and the anti-conflict unit generates an alert signal indicating that the module requested to be loaded into the new task is the same as the module already loaded in the first task.

18. A method of multitasking with a mobile terminal, comprising:
determining whether a module requested to be loaded into a new task is the same as a module already loaded in a first task; and
preventing the same module from being twice loaded.

19. The method according to claim 18, wherein the requested module is an I/O module.

20. The method according to claim 18, wherein the requested module is a module that performs an I/O operation in a memory.

21. The method according to claim 18, wherein the requested module is a message service module.

22. The method according to claim 18, wherein the requested module is a camera module.

23. The method according to claim 18, wherein the requested module is an address book module.

24. The method according to claim 18, wherein preventing the same modules from being twice loaded comprises disconnecting the module loaded in the first task and then connecting the disconnected module to the new task.

25. The method according to claim 24, further comprising disconnecting the module from the new task and then reconnecting the module to the first task, according to a user's instruction to resume the first task.

26. The method according to claim 18, wherein preventing the same modules from being twice loaded comprises deactivating the module loaded in the first task, and then loading the requested module into the new task.

27. The method according to claim 26, further comprising terminating the module loaded in the new task, and then reactivating the module loaded in the first task, according to a user's instruction to resume the first task.

28. The method according to claim 18, wherein preventing the same module from being twice loaded comprises terminating the module loaded in the first task, and then loading the requested module into the new task.

29. The method according to claim 28, further comprising terminating the module loaded in the new task, and then reloading the module previously loaded in the first task back into the first task, according to a user's instruction to resume the first task.

30. The method according to claim 18, wherein preventing the same module from being twice loaded comprises directing the new task to the module loaded in the first task.

31. The method according to claim 30, further comprising withdrawing the direction to the module loaded in the first task, according to a user's instruction to resume the first task.

32. The method according to claim 18, further comprising generating an alert signal indicating that the module requested to be loaded into the new task is the as the module already loaded in the first task.

33. A computer-readable medium which stores a program for multitasking with a mobile terminal, the program comprising:
conflict determination code for determining whether a module requested to be loaded into a new task is the same as a module already loaded in a first task; and
conflict prevention code for preventing the same module from being twice loaded.
